# EUROPEAN PATENT APPLICATION

(11) **EP 4 506 835 A1**
(43) Date of publication of application: **12.02.2025**
(21) Application number: 23315308.9
(22) Date of filing: 08.08.2023
(51) Int. Cl.: G06F 16/958, G06F 16/9537

(54) **APPARATUS AND METHODS FOR THE GENERATION AND SERVING OF WEB BASED CONTENT**

(71) Applicant: Amadeus S.A.S., 06410 Biot (FR)
(72) Inventor: MOUYADE, Jean, 06410 Biot (FR); PEROT, David, 06410 Biot (FR); OUSLIMANE, Sofiane Nait, 06410 Biot (FR); THIERY, Arnaud, 06410 Biot (FR)
(74) Representative: Mathys & Squire

(57) **Abstract**

A method is described for providing web content for a plurality of users. The method includes generating a first portion of the web content. Generating the first portion comprises inputting a query to a generative AI system, the query including a plurality of keywords including a location identifier, receiving an output from the generative AI system based on the query, the output including web content comprising at least one of text-based, image-based, audio-based or video-based content. The output is analysed to determine whether the output meets at least one required criterion and is further analysed to determine whether the output meets at least one optimisation criterion. A revised query is then formed for the generative AI based on the results of the analysis against the required criterion and against the optimisation criterion. The revised query is input to the generative AI system, wherein the revised query includes at least one additional keyword based on the required criterion or at least one additional keyword based on the optimisation criterion and a revised output of the generated web content is received from the generative AI system, the revised output including web content comprising at least one of text-based, image-based, audio-based or video-based content. The revised output of the generated web content is stored at a server for retrieval by a user.

## Description

The present invention lies in the field of web based content generation and is directed in particular to more efficient methods for generating and serving web content to requesting users. The methods and systems described herein are predominantly described in the context of the travel industry, but it will be apparent that the same methods may apply equally in other contexts and industries. Moreover, while the present specification focusses on the generation of web content, it will be appreciated that the content generated may be used equally for other dynamic content such as mobile application content or for static content such as travel guides and ebooks as well as emails and other messages sent to subscribers.

### Background

When searching for travel information and options, users look on average at 90 different websites. In addition to travel providers such as airlines and ferries, and accommodation providers such as hotels and campsites, users also look at many websites for information about restaurants, local attractions, in-destination activities and events. However, to do this, users have to visit multiple different sites and gather the information. Each site that is visited needs to be designed, written, stored, indexed and then transmitted to the user on request, requiring significant resources. Moreover, since many of the individual websites are designed to provide general information and not information specific to certain types of traveller, a user is served a lot of unnecessary content and must visit a larger number of web pages, hence increasing storage and transmission requirements.

Equally, from the point of view of companies in the travel sector, which is international and fast moving, providing information that is accurate and relevant is particularly challenging. Some companies put significant time and technical resource into maintaining web content. However, in such an international sector, it is very difficult to provide web content that is relevant, accurate and up to date in a large number of languages. Accuracy is particularly important in an industry where users need to rely on the information that is provided to them to make plans and ensure any trip runs smoothly.

For many companies in the sector, it is not possible to keep up with the rapid changes in information in order to provide optimal information for users using traditional web content generation techniques. A typical solution for companies such as airlines who require landing pages covering a large number of destinations is simply to keep those pages very brief, sometimes providing links to web content from other providers, such as hotel chains. However, this leads users away from the original web site.

In other cases, companies simply keep their web content very short and provide very limited information. Such content is limited to information that does not change frequently. However, this means that the information is less interesting and potentially less relevant for the user. Moreover, limited content will not rate highly in search engines and the content cannot adapt to improve its ranking and visibility.

Moreover, airlines also face a particular problem since, as very international businesses, their content often has to be provided in a large number of different languages.

In some cases, server side rendering techniques have been employed to allow the more dynamic generation of at least some of the content on a web page on request. However, requiring a server to render each page at the time the website is called creates a bottleneck and slows down the experience for the user.

Due to the bottleneck created using server side rendering techniques, websites are often designed using portions of content that are pre-written and portions of content that are generated when the website is called. However, in a very international fast-moving industry, keeping even the static portion of web content up to date in a large number of different languages is very challenging.

As a result of the issues set out above, for companies and service providers in global, fast moving industries, there are three main choices for providing web content.

One option is to provide only simple content that will not change or become obsolete. This allows the web content to be maintained in the large number of languages necessary without undue burden on the content creators. However, this approach provides minimal utility for users and often requires links to external websites, which is not ideal for the original service providers.

A second option is to increase server side rendering to generate more content on the fly, but this is processing-intensive, slows the process of servicing web content and risks errors in the information provided.

The final option is to provide user-created content that is not presented as accurate, but is moderated by other users in order to increase its accuracy using reviews and user feedback. This option is only available to web pages with a large user or subscriber base, however, and is not suitable for all content providers. Moreover, this approach does not result in professional, moderated and highly trustworthy web content.

There are therefore significant drawbacks with all of the approaches previously tried and all require significant resource to store and serve to users who are seeking information, particularly in fast moving industries such as travel.

It is noted that the discussion above and the solutions and its various embodiments set out below are described in the context of web content, such as web pages, videos and images. However, it will be appreciated that the system and methods described below are equally useful in generating content for other dynamic content such as mobile application content or for static content such as travel guides and ebooks as well as for travel-related emails and messages to subscribers and users.

### Overview

Aspects of the invention are set out in the independent claims and preferred features are set out in the dependent claims. Preferred features of one aspect may be applied to other aspects alone or in combination.

In a first aspect, there is described a method of providing web content for a plurality of users, the method comprising:
generating a first portion of the web content, wherein generating the first portion comprises:
inputting an initial query to a generative AI system, the query including a plurality of keywords including a location identifier;
receiving an output from the generative AI system based on the query, the output including web content comprising at least one of text-based, image-based, audio-based or video-based content;
analysing the output to determine whether the output meets at least one required criterion; analysing the output to determine whether the output meets at least one optimisation criterion; forming a revised query for the generative AI based on the results of the analysis against the required criterion and against the optimisation criterion;
inputting the revised query to the generative AI system, wherein the revised query includes at least one additional keyword based on the required criterion or at least one additional keyword based on the optimisation criterion;
receiving a revised output of the generated web content from the generative AI system, the revised output including web content comprising at least one of text-based, image-based, audio-based or video-based content; and
storing the revised output of the generated web content at a server for retrieval by a user.

Advantageously, the method can enable more efficient generation of web based content without sacrificing search engine optimisation or accuracy. In particular, the generation of content can be made more efficient in terms of maximising the relevant content provided while minimising processing power required for generating the content, transmitting the content, downloading and processing the content at the end user device.

Moreover, content generated according to the claimed method can be generated frequently to keep it up to date, since the content generation is an efficient iterative process using the generative AI. It will further be appreciated that the content can be generated directly in multiple languages, reducing delays and costs associated with translations.

In particular, iterative generation of content using a generative AI system, with criteria in place to monitor both predetermined requirements for the content and opportunities for optimisation enables continuous improvement of the content in an efficient and effective manner.

The method as a whole can enable content to be regularly reviewed and updated to ensure it is kept up to date. An alternative way to achieve that might be to rely more heavily on server side generation of web content, so that more content is generated only when the user makes a request for web content. However, as noted above, server side generation is resource intensive at the time the website is requested. Moreover, if large numbers of users request similar content, there can be much duplication in the generation and serving of the content by the servers. The claimed method can reduce the burden on the servers, increasing efficiency of the network as a whole. Since the method enables regular re-generation of the content, the efficiencies are achieved without a cost of only being able to provide old and potentially out of date information, as can occur with traditional statically-generated content.

Additionally, since the content is regularly updated, but essentially pre-generated and static, the prepared content can be pushed out to be cached in the network at points closer to the requesting user. This makes the serving of web pages based on that content faster and more resource-efficient. Again, this can be achieved without limiting the web content to be generic static content written to ensure it will not go out of date, which is less useful for the requesting user and limits what the web content can cover.

In some embodiments, the query includes an indication that the query relates to travel or locations, in particular in a broad sense since many travel related queries are queries relating to architectural, cultural, historical or sporting points of interest

Optionally, the method further comprises:
receiving at least one request for web content from a user, the request including a location identifier;
analysing the location identifier to identify a first portion of the generated web content that corresponds to the user query;
generating at the server a second portion of web content that corresponds to the user query based on live data; and
providing the first portion and the second portion of web content to the user as a web page in response to the request.

This development of the method enables the system to combine static pre-generated content with content generated "live" when the user makes the request. This can allow the owner of the website to maintain control over the bulk of the content, and to allow the advantages of faster and more efficient serving of the content to the requesting user, while also allowing elements of the content to provide up to date information based on live data.

Optionally, the at least one required criterion includes at least one of a predetermined level of accuracy of the output and a predetermined level of completeness of the output. A level of accuracy might be based on a comparison to existing web content, for example based on identifying and checking significant differences in information provided in the generated content. In particular, the new content may be checked against a previous version of the content or against content previously written by more traditional methods by the owner of the website. This analysis can identify significant differences in facts, which can then be flagged and added to an accuracy score for comparison to a threshold. New content that has a certain number of accuracy query flags can be marked for regeneration or checked manually.

In a particular example, analysing the output to determine whether the output meets at least one required criterion includes interrogating the output to determine whether specific elements are present. For example, a prompt may be created to analyse the generated content to determine whether information relating to predetermined keywords is present. This analysis can use natural language prompts as described elsewhere herein.

Similarly, completeness may be tested for the generated content. For example the content may be tested against existing content or against a database of information to ensure that key facts and information is not missing.

Optionally, the at least one optimisation criterion includes obtaining an indexation and a presence in the search engine ranking for the generated web content.

Optionally, the optimisation criteria include obtaining a search engine ranking for the generated web content, optionally wherein the search engine ranking is based on a keyword extracted from the web content or is based on a keyword defined in a related user search. Optimisation of the content based on search engine rankings can enable the generated content to be improved and refined to be more relevant to user's requests.

The optimisation criteria may comprise measures such as the volume or density of keywords within the generated web content and/or the frequency of those keywords in user searches. The optimisation criteria may also be based on more real-world measures such as the volume of visits to particular places or attractions that are mentioned within the content.

Further optionally, forming a revised query based on the results of the analysis comprises adding keywords to the query so that the revised output of the generated web content meets the at least one required criterion or the at least one optimisation criterion. Keywords may also be added to improve the content against these criteria even once they have been met, for example to continue to optimise the content.

In one implementation, the location identifier comprises an identifier of an airport or a city and wherein the method further comprises generating a plurality of keywords to input into the query based on a region surrounding the airport or the city.

Optionally, the initial query or revised query is based on a previously-generated portion of web content. That is, keywords for the initial query or revised query may be extracted from existing web content. The existing web content may include content previously generated by the same entity developing the new website, for example it may be traditionally generated static content already available from the content owner.

Optionally, the initial query or revised query is based on data relating to search queries submitted by a plurality of users.

Systems and apparatus comprising means for implementing the methods described herein, including network nodes, computer programs, computer program products, computer readable media and logic encoded on tangible media for implementing the methods are also described.

### Description

Exemplary embodiments will now be set out in more detail with reference to the figures in which:
Fig 1 illustrates a method of generating web content according to one embodiment;
Fig. 2 illustrates a method for review and refinement of web content according to one embodiment;
Fig. 3a illustrates a further method of generating web content comprising a static portion and a portion based on live data according to one embodiment;
Fig. 3b illustrates a further development of the method of Fig. 3a;
Fig. 4 illustrates a further method of generating web content including input from a user query;
Fig. 5 illustrates elements of a system described herein according to one embodiment;
Fig. 6 illustrates content generated by methods such as those described herein.

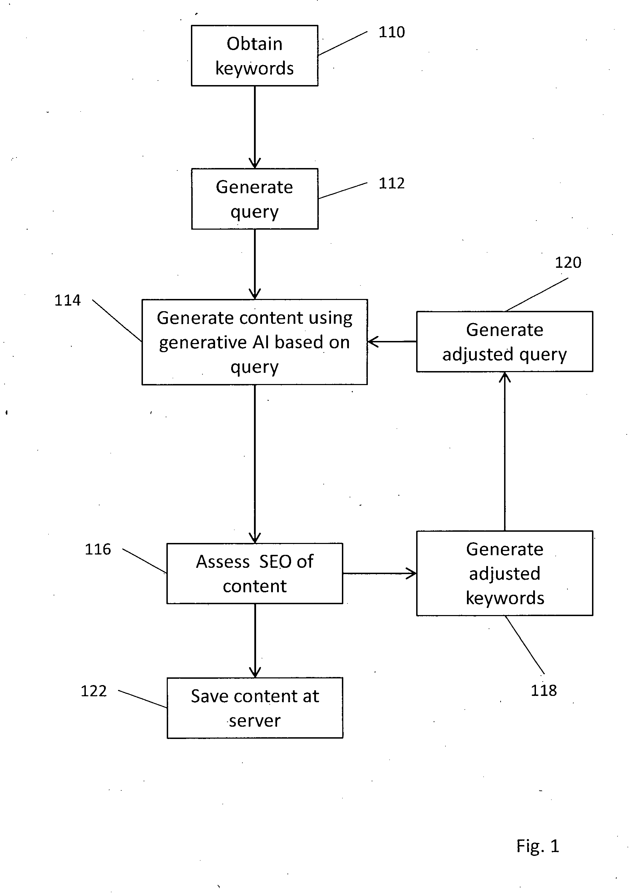

An example implementation will now be described with reference to Fig. 1. The example below sets out the process for the generation of a single web page or series of web pages. However, it will be appreciated that the advantages of the methods described herein become more apparent with the generation of multiple items of content, whether that content relates to different subject matter or whether the methods are used for the regular re-generation of web content relating to the same material. That aspect of the system is also described in more detail below.

The examples below are provided in the specific context of the airline industry. However, it will be appreciated that they are not limited to that specific implementation and apply equally to other contexts or industries whether in the private, public or charity sectors. Moreover, the examples provided herein relates to the generation of web content, but content may equally be generated for other online or offline uses in electronic or physical media, such as emails, social media content, marketing information, ebooks and printed publications. Additionally content may be generated in a broad sense in any of the embodiments described herein with that content then being available for use in a number of different contexts.

The generation of content that requires information to be gathered from a large number of sources and presented in a coherent manner to a user may benefit from the methods described herein; other examples may include the generation of content to provide information and reviews about retail locations, education establishments, or healthcare facilities. Types of sources that from which information may be drawn might include information published by the institutions or businesses themselves, reviews from users and factual information that may be drawn from directories, such as contact details and opening times.

In one embodiment of the present system, one or more pieces of information or keywords are obtained 110 relating to the web content. These keywords may be derived from a query received from a user or may be entered into the system as raw data. For example, in the travel industry, the system may be provided with a list of destinations (such as cities) in one or more countries or a list of International Air Transport Association (IATA) airport codes. The location list itself may form part of the keywords, but further keywords may also be derived from the locations, for example for each destination or IATA code provided, a list of towns and cities within the region may be generated. If the keywords come from a user query, the natural language user query may be analysed to generate keywords relating for example to location.

Further keywords are defined depending on the purpose of the particular implementation. For example, in the present example, further keywords may include: travel, holiday, event, hotel, airline. These further keywords tie the context down to the particular use for the web content, in this case for travel information.

In addition, keywords may be generated to guide the system not to include certain information or types of information. For example, in the travel based example, keywords such as "news" and "current affairs" may be input as exclusionary keywords since such information may not be necessary or desirable in a travel context.

In addition, exclusive keywords may be defined. For example, where the information to be generated relates to a particular airline or hotel, exclusive keywords may restrict the system to generating only information relating to that particular airline or hotel group.

The keywords described above may be obtained in a number of different ways; for example a lookup table or database may contain a list of locations served by a particular airport. Alternatively, a generative AI system itself may be used to generate a query containing keywords relevant to a particular initial query, such as an IATA code.

Based on the keywords generated or obtained via a generative AI system, a query is generated 112 for a generative AI system to request the output of data for use as web content. The query may, for example take a form such as:
Provide information about city ${ city}.
   Don't forget to provide latitude / longitude for city ${city}.
   Metropolitan area code, 3 letters, uppercase for city ${city}.
   Answer with a code only when there is at least one airport in the city.
   Knowing that for:
      - Paris it is PAR
      - Marseille it is MRS
   Also provide the list of airports (only IATA code) close to city ${city}.
Answer with a ${style} style and ${tone} tone.
   Write a description about city ${city} (only plain text, no title),
   around 500 words maximum, SEO optimized, focused on travel, use as landing page, travel guide for airline websites.

The query can be a natural language query or be provided in a more list-based format as shown in the example above. The query may optionally include a time restriction, which would assist in determining appropriate information for a particular time of year or information about events occurring at a particular time. In some embodiments, the landing pages that are being generated have sections and time restrictions can apply to information generated for particular sections; for example, sections related to activities (concerts, sport events, etc...). However, for other sections of the page being generated, time restrictions are not used. In one example, the content of a page may mention a time-bound event that will automatically expire when the event is over.

Web content is then generated 114 using generative AI based on the query. In the present example, that is text based web content. However, the content may instead or additionally comprise visual (images), audio and/or video content..

Since a reader of the web content is likely to be relying on the information provided, the creativity or "temperature" of the generated content is set to be "low" or off so that the generative AI provides only information that is factually correct and verified.

This first iteration of the web content is then assessed 116 within a search engine optimisation (SEO) system. In particular, the generated content is checked with regard to its ranking for searches performed for related keywords. Moreover, the content is assessed to ensure that the produced content includes answers to the most common questions asked by users on the search engines; for example, to check that the content includes a specific attraction or national wonder, a specific local food, famous sports team or local craft.

Based on the outcome of the search engine optimisation, the query input into the generative AI is updated, for example to add or remove keywords 118 to improve the semantic field of the created content before an adjusted query is generated 120 and used to generate a further output of the content. The generation of the web content is therefore an iterative process. This enables the generative AI to produce web content that maximises the utility and relevancy of the information for requesting users while increasing the SEO ranking against target keywords.

The process described above may be run as an iterative process until the content produced meets criteria within the SEO assessment as described in more detail below. For example, until the content ranks within the top three search engine results for 5 keywords used in the generation of the content. Alternatively, the iterative process may simply be run a predetermined number of times.

Once the content has been generated, it is saved at the server 122 where it may be reviewed by the content owner and served to requesting users.

A particular challenge in the method described above is in how to generate an appropriate query for the generative AI so that it provides accurate, relevant information that doesn't miss out the most important information. In a specific example, having a page that focusses on Paris without mention of the Eiffel Tower would not be acceptable. Avoiding such problems relies on expert programming of the prompts for the generative AI. One embodiment of a method that enables query generation in a way that provides accurate information generation will now be set out in more detail.

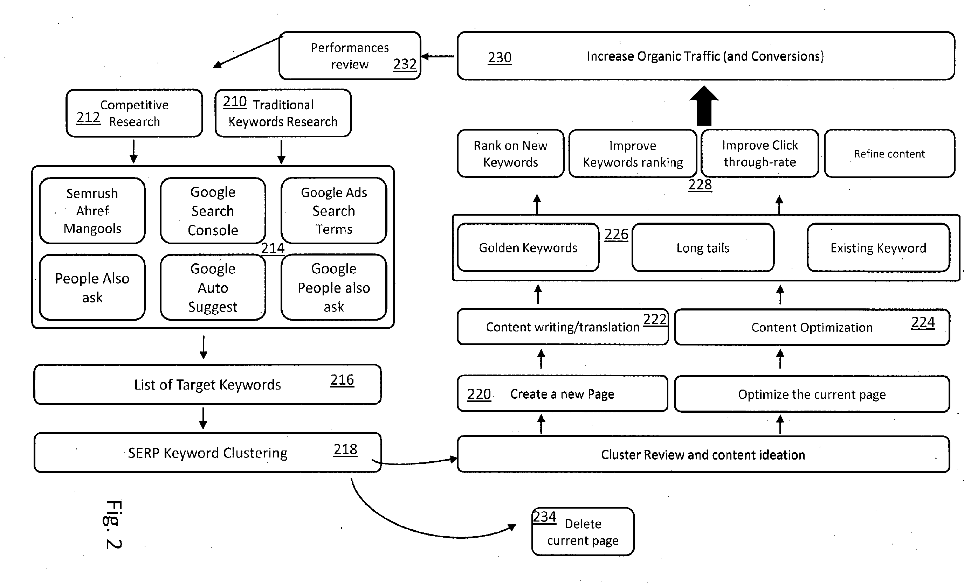

In particular, the optimisation of the web content will be further described with reference to Fig. 2. In particular, Fig. 2 illustrates an iterative process that enables the generation of web content. In order to generate a first iteration of the content, keywords for a query are generated using keyword research 210 and competitive research 212, for example based on web content similar to that the user wishes to generate.

The generated keywords can be checked, refined, amended and augmented using keyword optimisation tools 214 such as Semrush, Ahref, Mangools, Google SERP, Google Search Console, Google trends, Keyword Planner Google Ads or Cloud Natural Language. This generates a more complete, accurate and useful list of relevant target keywords 216. An additional step of keyword clustering 218 can be used to focus different sections or pages of the web content to be generated into different areas of the website. For example, keywords relating to places to stay may be clustered and a separate cluster may be formed for events-based keywords.

The generated and optionally clustered keywords are then formed into a natural language query 220 for use in a request to a generative AI system. An example query might include something such as: *Generate 500 words of text for a web page relating to places to stay, landmarks and attractions to visit, events and travel information for a trip to the area surrounding London Gatwickin July. Include information about London, the North and South Downs and Brighton and restrict the hotel information to hotels in the Hilton group.*

In the first iteration, the generative AI is used to create new web content 220. If this is a subsequent request, and an earlier version of the web content exists, the query may include at least elements of the existing web content and the generative AI may use the given keywords in the query to update or improve the existing web content.

Generation of the web content may include content writing in one or more languages, content translation 222 and content optimisation 224.

The generated web content is then analysed 226 to identify high volume keywords (that may be termed golden keywords) that represent the majority (potentially around 80%) of searches performed by users, lower-volume keywords that are more specific and are present in a smaller percentage of user searches (that may be termed long tails) and existing keywords upon which the original query was formed. It is noted that, throughout this specification, the term "keyword" is used broadly to include chains of words and short keyword phrases. Therefore, a "keyword" as used herein may not simply be a single word. The keywords derived from the generated web content can then be used to analyse 228 how well the web content performs against search engine optimisation and ranking tools and to refine the content to improve its performance. For example, the web content may be ranked for new keywords that appear within the content and the keyword ranking for existing keywords can be assessed and improved by refinements to the content. Measures can also be taken to improve the click-through rate of the content.

In a specific, non-limiting example of an implementation:
In a first iteration, generation of content relating to Paris mentions the Eiffel Tower as a particular point of interest for Paris.

The search engine will then rank the page for the keyword phrase "Eiffel Tower" and the search engine optimisation (SEO) tool will generate further keywords relating to Paris and Eiffel Tower (Ex : Gustave Eiffel or Champ de Mars).

In a second iteration, the prompt used to re-generate the content will add Gustave Eiffel and Champs de Mars as these terms are the most common requested by users in connection with the Paris and Eiffel Tower keywords.

This process is iterated until the SEO ranking does not improve further with additional iterations of the content being generated.

The measures described above, both to generate new content using generative AI based on a query derived from a researched and optimised set of keywords can also increase the number of visitors to that web content (organic traffic) and improve the click-through rate 230.

In the present system, the performance of a particular piece of web content against SEO and user engagement can be monitored 232 on a regular or continuous basis. This allows the owner of the web content to determine when to further refine or even regenerate the web content.

If regeneration of the web content is necessary, the original web content can be used to provide the initial set of keywords so that the system can cycle through the process described above again and further refine the content. Of course, it is always an option for the user of the present system simply to delete 234 the existing web content and start again with a new set of keywords.

As a further optional refinement of the above method, existing web content may be analysed to determine target keywords. For example, web content from other websites that relate to a particular destination may be analysed to extract keywords or the company's own previous website may be analysed for useful keywords to target the generative AI content. Alternatively, or in addition, keywords obtained from previous user searches may be used to enhance the generative AI query.

Once the web content is live and available, it is checked periodically to ensure that the page is ranked among the top results for target keywords (for example within the top 3 or on the first page of the search engine page results) and that it does not contain out of date information. The content can be adjusted, updated and/or re-generated as necessary using the methods described above.

In the example described, the system generates content that is approved prior to being released since this enables the content provider to retain control over the content and avoid incorrect information being output. A potential issue with AI-generated content is that incorrect information can be presented as convincing fact and human verification of the output can be helpful in ensuring that accurate information is presented to users.

It will be appreciated that an important aspect of the system and methods described above is the fact that it is possible to use the methods described herein to generate content in any language. Every country and language has its own peculiarities. Automatic Translation can be an asset and enabler but the simple translation of a text might does not mean that the translated keywords are the most relevant one for the country. Generating content directly in each language using the generative AI system results in a much more natural-sounding output than translating web content that originates in one language into another language. By way of example, Vol Paris-Bogota will be translated in Vuelos Paris Bogota in Spanish in Argentina but the most relevant and equivalent keyword could be Tiquetes Paris Bogota. Furthermore, web content such as audio and video content can be generated directly in multiple languages rather than using dubbing techniques. This makes the content more engaging for its users. The use of the methods described herein for multiple languages also reduces the need to translate the web content, significantly reducing repeated manual input or the use of additional automatic translation steps for web content that is regularly updated.

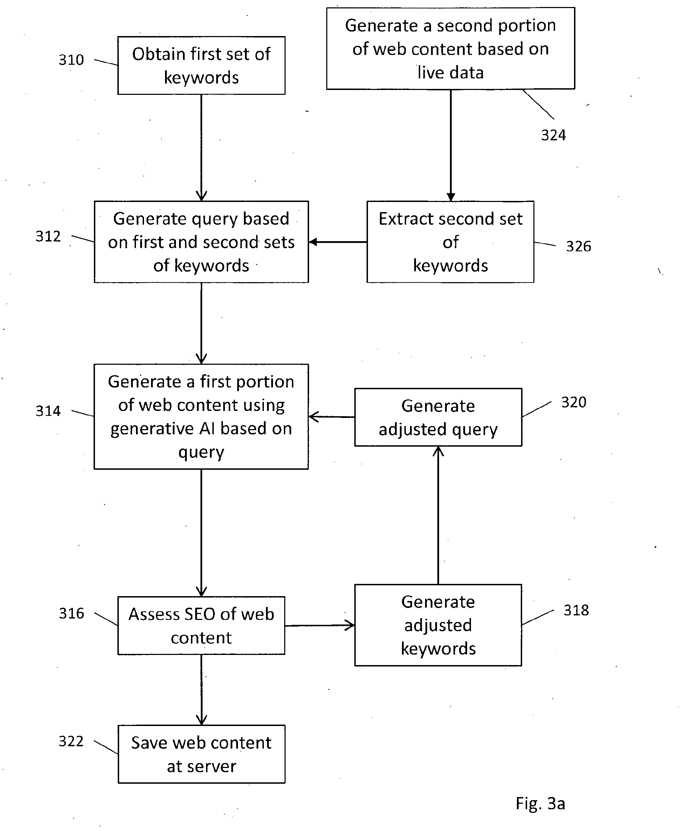

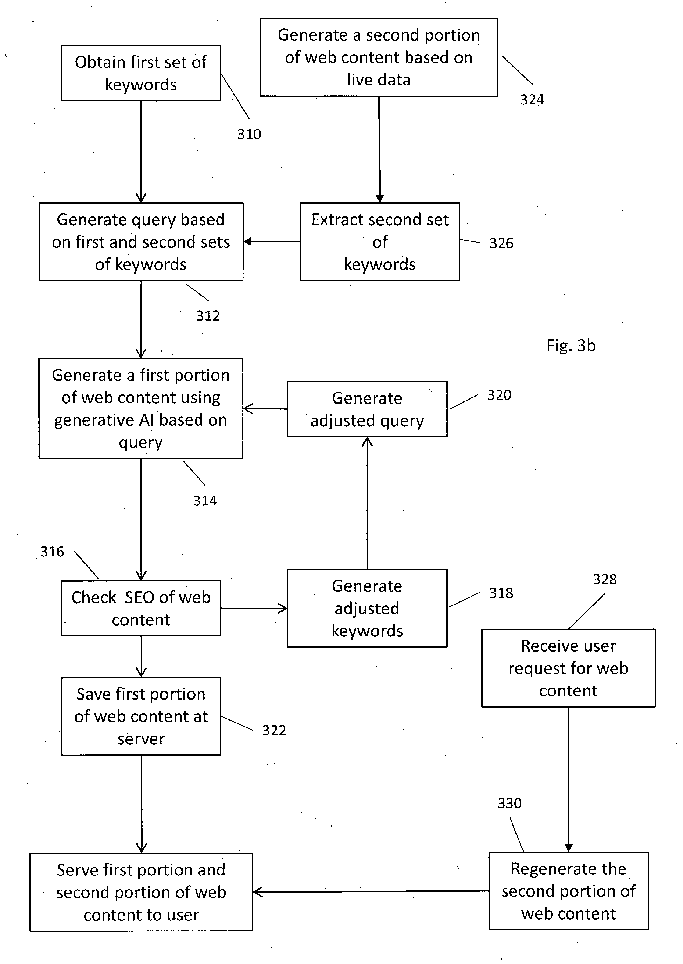

An example of a further embodiment is illustrated in Figs. 3a and 3b. This embodiment builds on that described with reference to Figs. 1 and 2 above and may incorporate some or all of the features previously described.

It is often useful and necessary to produce content wherein a first portion of the content is pre-generated static content and a second portion of the content is generated based on live data. For example, for a city such as Paris, static web content may include information about attractions, transport within the city and background that the user might be interested in learning about, such as the history of the city. The second portion of the content, the live web content, may include information such as schedules and pricing for flights to the city (which will depend not only on live data from one or more airlines but also on the location of the requesting user), pricing and availability for accommodation options, and information about events in the city or region during a particular time period.

Enabling the content to be served in this way can provide technical advantages since it enables portions of up to date content to be provided to a user without the processing burden of generating all of the content in response to the user request. Moreover, as with all of the static and pre-generated content described here, the static content may be pushed out and cached at a network of local servers. This reduces the transmission resources required to serve the content to the users and reduces demand on the network.

Additionally, the regular updating of at least portions of web content can itself increase the ranking of a page within search engine listings since search engines can prioritize content that has been more recently generated.

As will be appreciated by a review of the method in Fig. 3a, while the first portion of web content is generated using a method corresponding largely to that already described in relation to Fig. 1, the incorporation of live data into a web page that already includes pre-generated static content introduces additional challenges.

One approach is to simply to store the pre-generated static content as a first portion of the web content and then to generate a second portion of the content when the user makes a request to access the web page. However, taking this approach risks that some of the content will be repeated between the static pre-generated first portion of the web content and the live second portion of the web content. Moreover, it is possible that some of the first portion of web content may contradict the second portion of the web content. For example, a first, static portion of web content may include information about a particular chain of hotels within the city. However, the second portion of the web content that is based on live data may indicate that there is no availability in those hotels at the time the user intends to travel. In another example, the first portion of the web content might include information about attractions in a region. However, the second portion of the web content might include information about events in the region. Where those events are arranged to take place at some of the main attractions of the region, this can result in significant overlap between the information in the first portion of the web content and information in the second portion of the web content. This can be frustrating for the requesting user and also wastes resources in serving that content to the user twice.

The method described with reference to Fig. 3a reduces the likelihood of overlap and self-contradiction within the web page as a whole that is made up of the first portion and the second portion.

In particular, in addition to generating the first portion of the web content as described above, based on a first set of keywords 310, a second portion of web content is also generated 324 based on live data that might be called during a web search by a user. As noted above, the live data might include one or more of information such as accommodation availability for a particular time, flight information and pricing, and/or events in a region at a particular time.

Keywords are then extracted from the generated live data 326. The keywords can be extracted by an AI analysis system. The keywords generated from the second portion of the web content are then used together with the first set of keywords in the generation of the query 312 that is input into the generative AI in order to generate the first portion of the web content 314. In particular, the second set of keywords may be used to exclude certain information or types of information from the first portion of the web content. For example, if the second portion of web content includes information about a music festival occurring at a particular town within the region, the generative AI producing the first portion of web content can be instructed not to produce information about that event based on keywords relating to the festival extracted from the second portion. Similarly, information about airlines that fly to that region can be excluded from the first portion of the web content.

Fig. 3b illustrates the same method but with the addition of a user request for web content 328 at a point later in time. Since the second portion of web content relies on live data, the second portion of web content generated to inform the generation of the first portion of web content cannot simply be used when the user later requests the web content. Instead, the second portion of the web content must be re-generated or populated based on live data 330 and optionally also based on the actual request from the user. For example, the user may request web content on the basis that they are travelling to the destination from New York, but the second portion of web content previously generated may have made the assumption that a requesting user might be travelling from London. Although the second portion of the web content therefore needs to be re-generated with new live data, the fact that the first portion of the web content has been generated to take into account what is expected to appear in the second portion of the web content reduces the likelihood of overlap and conflicting information between the two portions.

The fact that the content is structured into sections (for example, general information, point of interest, activities, weather, etc...) on the basis of specific keywords and that the content has been generated in one go, at least with a previous version of the second portion of web content, reduces the likelihood of overlap.

This not only provides a more accurate experience for the user but also minimizes the transmission of the same data twice for a single web page, making the serving of web pages more efficient and less resource-intensive.

In summary, the exemplary method in Fig. 3b produces some pre-prepared text, and then some text created on-the-fly when a user requests receipt of the content. In exemplary embodiments, the proportion of pre-prepared content to on the fly text is about 30:70, but the ratio may be more like 50:50 in some cases. As explained above, these two types of content must not overlap or describe the same things. On-the-fly content must therefore be new as compared to the pre-prepared content.

In the embodiment of Fig. 3b, the creation of the data at two times saves the processing power needed at search time, as not all content is produced by the Generative AI on-the-fly.

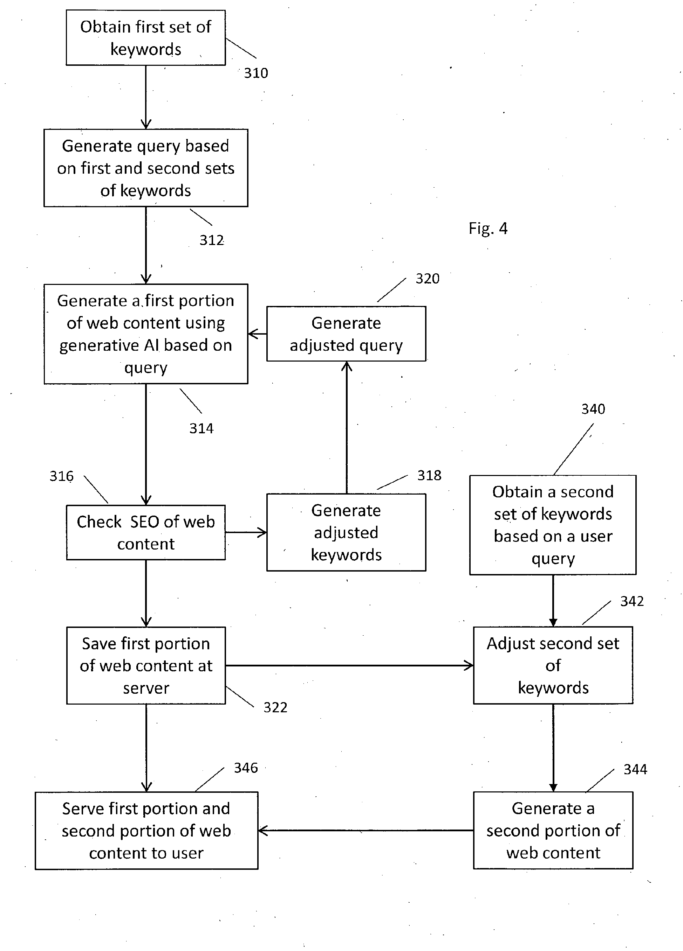

Fig. 4 illustrates a related method that may be implemented alone or in conjunction with that described with reference to Figs. 3a and 3b. In particular, alongside generation of the first portion of web content 314, a second set of keywords is generated or derived from one or more user queries 340. The keywords may be derived using an AI system. The second set of keywords can then be compared to the first portion of the web content already saved at the server and can be adjusted 342, in particular to remove any words that are already taken into account and covered by the first portion of web content. For example, if the second set of keywords includes "local markets" but the first portion of web content already includes information about markets to visit in a particular region, the term "local markets" can be removed from the second set of keywords. As the skilled person will appreciate, this ensures that content already present in the first portion of the web content is not repeated as a result of the incoming user query. However, keywords that cover new content not already included in the first content are retained and a generative AI system is used to generate a second portion of the web content 344 based on the keywords retained from the user query.

The first and second portions of the web content can then be served to the user 346. This method provides a number of advantages. In particular, it allows content to be tailored to a specific user query without the system having to generate the whole response to the user query each time it is made. Much information in a particular sector will be common to many user queries; for example, a user visiting Paris will probably always want to know about the Eiffel Tower. This information can therefore be pre-generated and stored in the first portion of the web content. The first portion of the web content can be cached throughout a network for efficient delivery to the requesting users. However, the second portion of the web content can be generated on the fly to enable parts of the information not covered by the first portion to be provided to the user. This improves the user experience while minimising the burden on the system of generating and serving web pages.

While the present specification uses the terms ."web pages" and "web content", it will be appreciated that the content generated my be spread over multiple interlinked pages and will not necessarily all be presented to the user at the same time on a single page.

In a further embodiment, content may be tailored to a specific user based on that user's search history or a history of their previous trips. In a particular implementation, the system creates communities or groups of users with common interests based on them using similar search terms (for example those searching for destinations in North America, those searching for active holidays or those searching for winter trips) or having similar previous booking patterns for trips. Content can then be generated for these communities so that the content is more relevant and personalised to users in those communities.

The generated content (second web content) may be combined with a first portion of pre-generated content in order to personalise the overall web content. The second portion of the web content may be generated on the fly for the user by a generative AI system, taking into account the information already present in the first portion of static content in a way corresponding to that described above in relation to Fig. 4.

From a user-experience point of view, the interface might operate by enabling the user to select a place about which they wish to find out more information, either by clicking on a location on a map or globe, entering the name of a place or selecting a place from a list. In response, the methods described above are used to generate the content so that pages regarding experience, cities, things to see at that location and travel information are shown.

The user may also enter a natural language query such as: "*I would like to visit Taj Mahal during the Easter Holidays*" and an AI system may be used to split the query into various pieces of information to give transactional data. Visit = travel; Taj Mahal = nearest airport Agra; Easter Holidays = April. These terms can them form the basis of keywords from which a prompt is created for the generative AI query.

In all of the methods described here, the generative AI is preferably trained to use trusted sources of data on the internet and constrained to using only this data based on settings within the generative AI large language model. The generative AI is therefore restricted to using and generating only information that has a high likelihood of being accurate. Moreover the "temperature" or creativity of the generative AI system is set to zero or low to prevent the generative AI from extrapolating incorrectly from its known data.

Audio and video generated content can be voiced by a voice that is selected by the company that is serving the content to the user - for example a voice that is chosen by the airline and is in line with the airline's brand and tone. Similar voices can be used to voice content in multiple languages.

Information may be generated by multiple different AI systems depending on the type of content. For example, a first AI may be used to generate text, a second to generate images and a third to provide audio and/or video content. However, similar keywords and inputs may be provided to each of the AI systems and the different portions of content may be merged together to produce the overall web page and experience for the user.

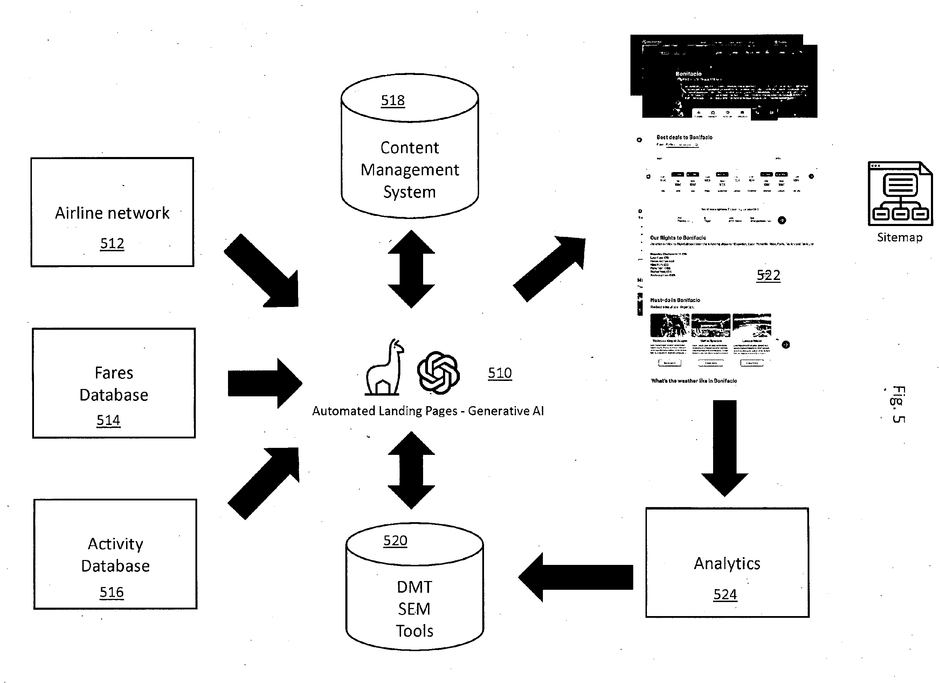

Fig. 5 illustrates the components and structure of a network for implementing one or more of the methods described here according to one embodiment. It will be appreciated that the diagram of Fig. 5 is schematic and simply highlights a number of potential components of the network. The topology of the network itself will be very different and any particular implementation of the system may include fewer or additional components.

The network is centred around an Automated Landing Pages Generative AI engine 510 (ALPaGA). In the particular embodiment illustrated, inputs to that system include the airline network 512, fares database 514 and activities database 516. Some of the information in those databases will be static information that can be used to generate web content ahead of time. Other portions of the data will be live data, accessible to be called when information is requested by a user.

A content management system database 518 and a database of tools 520 such as a search engine marketing (SEM) tool and Digital Marketing Tools (DMT) also feed into the ALPaGA engine in ways that have already been described above, as well as receiving generated data and feedback from the ALPaGA.

Moreover, as also described above, the ALPaGA is part of a loop of content creation in which content 522 is created and output before being passed to analytics 524 and search engine optimisation tools. The feedback then enables the ALPaGA to re-generate an improved version of the content for re-analysis or serving as web content to one or more users.

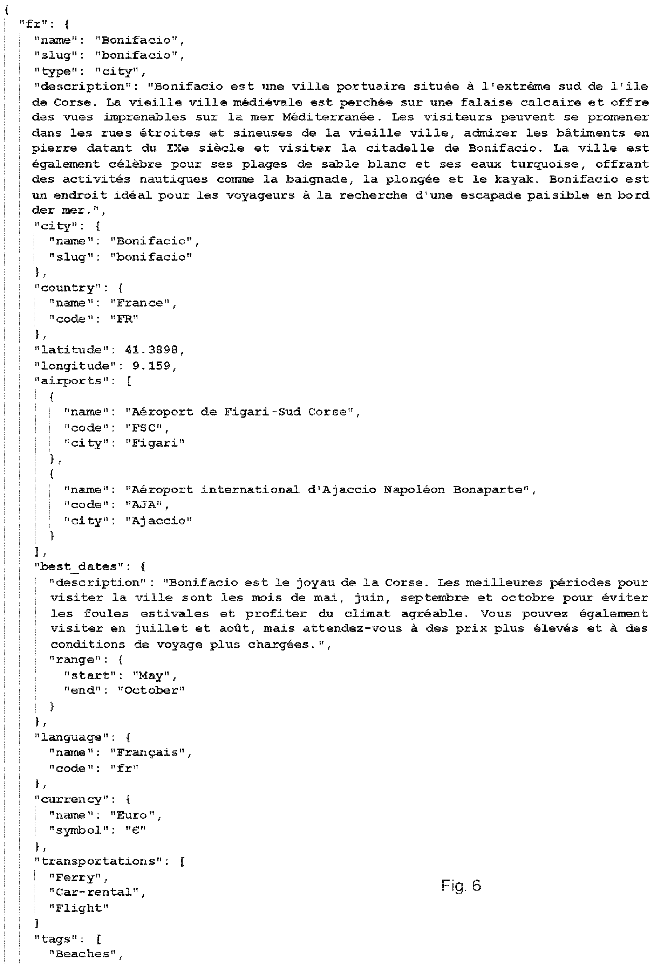

Fig. 6 provides a further example of a structured query according to one embodiment.

The present disclosure is not limited to the embodiments specifically described. Combinations of the described features is contemplated. Where elements are described in the form of "at least one of A and B" or "at least one of A or B", embodiments including element A exclusively, including element B exclusively, and including element A and B are each contemplated. Aspects, features, embodiments and advantages disclosed herein are merely illustrative and are not considered elements or limitations of the appended claims except where explicitly recited in a claim.

As will be appreciated by one skilled in the art, the embodiments disclosed herein may be embodied as a system, apparatus, method, computer program, computer readable medium or computer program product. Embodiments may take the form of an entirely hardware embodiment, an entirely software embodiment (including firmware, resident software, micro-code, etc.) or an embodiment combining software and hardware aspects.

Communications described herein may be transmitted using any appropriate medium, including but not limited to wireless, wireline, optical fiber cable, RF, etc., or any suitable combination of the foregoing.

Computer program code for carrying out operations for embodiments of the present disclosure may be written in any combination of one or more programming languages. The program code may execute entirely on the user's computer, partly on the user's computer, as a stand-alone software package, partly on the user's computer and partly on a remote computer or entirely on the remote computer or server. A remote computer may be connected via a wired or wireless network.

Aspects are described herein with reference to flowchart illustrations and/or block diagrams of methods, apparatuses (systems), and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions specified in the block(s) of the flowchart illustrations and/or block diagrams.

The figures illustrate the architecture, functionality, and operation of possible implementations of systems, methods, and computer program products according to various embodiments. It should be noted that, in some alternative implementations, the functions noted in the block may occur out of the order noted in the figures. For example, blocks may be executed concurrently, or in the reverse order, depending upon the functionality. Each block or combinations of blocks can be implemented by special purpose hardware-based systems that perform the specified functions or acts, or combinations of special purpose hardware and computer instructions.

## Claims

1. A method of providing web content for a plurality of users, the method comprising:
generating a first portion of the web content, wherein generating the first portion comprises:
inputting a query to a generative AI system, the query including a plurality of keywords including a location identifier;
receiving an output from the generative AI system based on the query, the output including web content comprising at least one of text-based, image-based, audio-based or video-based content;
analysing the output to determine whether the output meets at least one required criterion;
analysing the output to determine whether the output meets at least one optimisation criterion;
forming a revised query for the generative AI based on the results of the analysis against the required criterion and against the optimisation criterion;
inputting the revised query to the generative AI system, wherein the revised query includes at least one additional keyword based on the required criterion or at least one additional keyword based on the optimisation criterion;
receiving a revised output of the generated web content from the generative AI system, the revised output including web content comprising at least one of text-based, image-based, audio-based or video-based content; and
storing the revised output of the generated web content at a server for retrieval by a user.

2. The method according to claim 1 further comprising:
receiving at least one request for web content from a user, the request including a location identifier;
analysing the location identifier to identify a first portion of the generated web content that corresponds to the user query;
generating at the server a second portion of web content that corresponds to the user query based on live data; and
providing the first portion and the second portion of web content to the user as a web page in response to the request.

3. The method according to claim 1 or 2 wherein the at least one required criterion includes at least one of a predetermined level of accuracy of the output and a predetermined level of completeness of the output.

4. The method according to any of claims 1 to 3 wherein the at least one optimisation criterion includes obtaining an indexation and a presence in the search engine ranking for the generated web content.

5. The method according to claim 4 wherein the search engine ranking is based on a keyword extracted from the web content or is based on a keyword defined in a related user search.

6. The method according to any of claims 1 to 5 wherein forming a revised query based on the results of the analysis comprises adding keywords to the query so that the revised output of the generated web content meets the at least one required criterion or the at least one optimisation criterion.

7. The method according to any preceding claim wherein the location identifier comprises an identifier of an airport or a city and wherein the method further comprises generating a plurality of keywords to input into the query based on a region surrounding the airport or the city.

8. The method according to any preceding claim wherein the initial query or revised query is based on a previously-generated portion of web content.

9. The method according to any preceding claim wherein the initial query or revised query is based on data relating to search queries submitted by a plurality of users.

10. A computer program, computer readable medium or computer program product comprising instructions that, when executed, cause a computer to implement the method according to any of claims 1 to 9.
